# EUROPÄISCHE PATENTSCHRIFT

(11) **EP 0 345 535 B1**
(45) Veröffentlichungstag und Bekanntmachung des Hinweises auf die Patenterteilung: **11.08.1993**
(21) Anmeldenummer: 89109358.5
(22) Anmeldetag: 24.05.1989
(51) Int. Cl.: F16C 29/00

(54) **Verfahren zur Herstellung einer gehärteten Führungswelle für eine Linearführung**
Production method of a hardened guide shaft for a linear guide
Procédé de fabrication d'une tige de guidage trempée pour un guide linéaire

(30) Priorität: 07.06.1988 DE 3819279
(43) Veröffentlichungstag der Anmeldung: 13.12.1989
(73) Patentinhaber: Schwäbische Hüttenwerke Gesellschaft mit beschränkter Haftung, D-73414 Aalen (DE)
(72) Erfinder: Wiener, Richard, Dipl.-Ing., D-7080 Aalen 1 (DE); Merz, Rolf, D-7080 Aalen-Wasseralfingen (DE)
(74) Vertreter: Lorenz, Werner, Dipl.-Ing.

(56) Entgegenhaltungen:
- DD-A- 144 794
- DE-B- 1 211 674
- DE-C- 3 212 338
- GB-A- 2 136 529
- US-A- 3 236 993

## Beschreibung

Die Erfindung betrifft ein Verfahren zur Herstellung einer gehärteten Führungsstange für eine Linearführung, insbesondere für eine Linearführung mit einem mit Kugelbüchsen versehenen Führungsschlitten, und eine danach hergestellte Führungsstange.

Linearführungen werden zur Durchführung von Linearbewegungen auf vielen Gebieten eingesetzt, wie z.B. im Maschinenbau, in der Handhabungstechnik, im Vorrichtungsbau und in der Feinwerktechnik. Linearführungen können z.B. als Bausteine für Greifer, Roboter, Verschiebetische, Halterungen, Meßwerkzeuge und dgl. verwendet werden. Den Kern der Linearführung bilden dabei ein oder zwei Führungsstangen, auf der bzw. auf denen ein Führungsschlitten angeordnet ist, der entlang der Stange bzw. der Stangen verschiebbar ist. In Umkehrung kann jedoch auch der Führungschlitten ortsfest verbleiben und der oder die beiden Stangen werden verschoben. Für eine reibungsarme Verschiebung und eine hohe Belastbarkeit sind in dem Führungsschlitten im allgemeinen sogenannte Kugelbüchsen bzw. Linearkugellager mit mehreren Kugelumläufen angeordnet.

Die Relativbewegung zwischen der Führungsstange und dem darauf angeordneten Führungsschlitten kann auf verschiedene Weise erreicht werden. Bekannt sind hierfür Kugelrollspindeln, wobei eine Spindel parallel zu der Führungsstange verläuft und eine Spindelmutter in dem Führungsschlitten angeordnet ist. Wird die Spindel angetrieben, bewegt sich entsprechend der Führungsschlitten.

Nachteilig dabei ist jedoch, daß neben einem zusätzlich notwendigen Bauraum für die Spindel diese nicht unterstützt gelagert werden kann, so daß deren Baulänge beschränkt ist.

In der GB-A-2 136 529 ist eine Linearführung mit einer Führungsstange beschrieben, die über einen Teilumfangsbereich mit einer Verzahnung versehen ist. Zur linearen Verschiebung der Führungsstange dient eine Schnecke, die auf einer parallel zu der Führungsstange angeordneten Antriebswelle befestigt ist. Diese vorbekannte Linearführung ist jedoch nicht hoch belastbar und relativ bauaufwendig.

Bekannt sind auch Antriebssysteme mit Zahnriemen oder dgl., was jedoch ebenfalls einen erhöhten Aufwand an zusätzlichen Bauteilen und an Bauraum bedeutet. Außerdem kann dabei zum Teil die Führungsstange nicht unterstützt werden, was sich damit ebenfalls nachteilig auf die Baulänge auswirkt.

Ebenfalls bekannt ist es bereits, eine Zahnstange parallel zu der Führungsstange anzuordnen, die mit einem Gegenglied, im allgemeinen einem Ritzel, zur Verschiebung des Führungsschlittens zusammenarbeitet. Dabei sind jedoch ebenfalls zusätzliche Bauteile und ein höherer Aufwand notwendig. Außerdem ist eine derartige Linearführung ebenfalls Beschränkungen hinsichtlich ihrer Einsatzmöglichkeit unterworfen.

In der DE-B-1 211 674 ist eine Vorrichtung zum Härten von Zahnstangen für Lenkungen von Kraftfahrzeugen beschrieben. Dabei liegt jedoch ein anderes Einsatzgebiet und ein spezielles Härteverfahren vor.

Der vorliegenden Erfindung liegt daher die Aufgabe zugrunde, ausgehend von der DE-B- 1211 674 ein Herstellungs verfahren für eine gehärtete Führungsstauge und ausgehend von der GB-A-2136 529 eine nach diesem verfahren hergestellet Führungsstange zu schaffen, die sehr universell einsetzbar ist und durch die eine Linearführung mit einer geringen Baugröße bei hoher Belastbarkeit erreicht werden kann.

Erfindungsgemäß wird diese Aufgabe dadurch gelöst, daß in die Führungsstange über einen Teilumfangsbereich eine Verzahnung eingebracht wird, wonach die Führungsstange mit den Zähnen derart gehärtet wird, daß im Bereich der Verzahnung eine geringere Härte entsteht, als in den übrigen Bereiden der Führungsstange.

Falls erforderlich, kann die Führungsstange nach dem Härten - wie an sich bekannt - gerichtet und geschliffen werden.

Erfindungsgemäß ist nunmehr ein notwendiges Teil für die Verschiebung zwischen einer Führungsstange und einem Führungsschlitten in der Führungsstange selbst integriert, nämlich eine Verzahnung. Auf diese Weise ist es lediglich erforderlich, das Gegenglied, das im allgemeinen ein Ritzel sein wird, in dem Führungsschlitten anzuordnen. Weitere Bauteile sind - neben der üblichen Antriebseinrichtung, wie z.B. einem Antriebsmotor - nicht mehr notwendig. Die Führungsstange übernimmt damit eine Doppelfunktion, wodurch zusätzliche Bauteile entfallen können und gleichzeitig damit auch eine Baugrößenreduzierung erreicht wird. Die Verzahnung kann eine Gerad- oder eine Schrägverzahnung sein.

Durch die Härtung der Führungsstange wird eine hohe Belastbarkeit erreicht, wobei zusätzlich noch durch die Berücksichtigung von unterschiedlichen Härtebereichen auf die jeweiligen Besonderheiten bzw. Einsatzbereiche der Führungsstange eingegangen wird. Insbesondere bedeutet dies, daß man den Bereich der Verzahnung der Führungsstange zwar mit einer entsprechenden Härte versehen kann, aber gleichzeitig auch noch eine entsprechende Zähigkeit beibehalten kann. Der übrige Bereich der Führungsstange kann mit einer entsprechend höheren Härte versehen sein, so daß die darauf laufenden Teile keinen Verschleiß verursachen.

Ein sehr wesentlicher weiterer Vorteil der Erfindung besteht darin, daß auf diese Weise gleichzeitig auch die Antriebsbasis bzw. Führungsstange unterstützt gelagert und befestigt, z.B. verschraubt werden kann. Damit wird eine geometrisch definierte und schwingungsfreie Führungsbahn geschaffen, die sehr hoch belastbar ist. Außerdem kann eine beliebige Anzahl von Führungsstangen hintereinander angeordnet werden, wobei lediglich für einen einwandfreien Übergang des verzahnten Abschnittes zu sorgen ist. Auf diese Weise lassen sich praktisch Linearführungen beliebiger Länge aneinanderreihen. Bei einer Ausbildung einer Linearführung mit nur einer Führungsstange läßt sich auch in diesem Falle auf einfache und bekannte Weise eine Verdrehsicherung, wie z.B. durch Rillen, Leisten oder Abflachungen der Führungsstange erreichen.

Eine ausreichende Härte der Führungstange, was insbesondere für Führungsschlitten mit Kugelbüchsen notwendig ist, kann auf verschiedene Weise erreicht werden.

Von Vorteil ist es, wenn die Führungsstange mit einem Rundinduktor induktiv gehärtet wird, wobei der Magnetfluß derart gesteuert wird, daß im Bereich der Verzahnung der Magnetfluß niedriger ist als im übrigen Bereich.

Bisher war es als unmöglich angesehen worden, auf wirtschaftliche Weise eine Führungsstange, die aufgrund der auftretenden Belastungen oberflächengehärtet sein mußte, mit einer Verzahnung zu versehen.

Ein nachträgliches Einschleifen einer Verzahnung in die gehärtete Führungsstange wäre ein unvertretbar hoher Aufwand gewesen. Außerdem würde bei zunehmender Zahngröße der ungehärtete Anteil im mittleren und unteren Bereich der Zähne im Zahnabwälzbereich ansteigen, da man beim Einschleifen die gehärtete Oberflächenschicht teilweise durchdringen würde. Ein Einbringen der Verzahnung vor einem Härtevorgang war als ebenfalls undurchführbar angesehen worden. Bei einem induktiven Härten mit Rundinduktor, der auch eine ausreichende Einhärtung des nicht verzahnten Teils der Führungsstange erzielen soll, waren deutliche Überhitzungen im Zahnbereich zu erwarten, die bei einem anschließenden Abschrecken zum Ausbrechen von Zähnen geführt hätten.

Zwar käme grundsätzlich auch ein Einsatzhärten einer Führungsstange in Frage, aber neben anderen Nachteilen wäre die dabei erreichte Härtetiefe insbesondere für große Traglasten und bei Verwendung von Kugelbüchsen nicht ausreichend. Außerdem würde bei nicht rostenden Werkstoffen eine derartig gehärtete Führungsstange durch die Aufkohlung ihre Korrosionsfreiheit zumindest weitgehend verlieren.

Durch die Steuerung des Magnetflusses während des induktiven Härtens werden jedoch in überraschender Weise die zu erwartenden Probleme vermieden. Durch eine entsprechende Reduzierung des Magnetflusses im Bereich der Verzahnung und damit einer Reduzierung der Wirbelströme wird in diesem Bereich in geringerem Umfang Wärme zugeführt, die jedoch ausreichend ist, um den verzahnten Bereich der Führungsstange auf die gewünschte Härte zu bringen, ohne daß nachteilige Überhitzungen auftreten. Die Verzahnung kann dabei auch in vorteilhafter Weise zäher werden und damit ruckartigen Belastungen besser standhalten.

Wesentlich bei dem induktiven Härten ist somit, daß eine Situation geschaffen wird, wodurch der verzahnte Bereich keine so hohe Temperatur erhält wie der übrige Bereich der Führungsstange.

In erfindungsgemäßer Weiterbildung ist vorgesehen, daß die zu härtende Führungsstange wenigstens annähernd unverdreht durch den Rundinduktor durchgeschoben wird, und daß der Rundinduktor im nicht verzahnten Bereich der Führungsstange mit den magnetflußerhöhenden Teilen oder Änderungen versehen wird.

Durch eine entsprechende Anordnung von Teilen, die den Magnetfluß ändern, wie z.B. Blechpakete, läßt sich durch deren entsprechende Anordnung der Magnetfluß in gewünschter Weise steuern und damit die Härte der Zähne gezielt beeinflussen.

Voraussetzung hierfür ist, daß man in Abkehrung von der üblichen induktiven Härtung nunmehr die zu härtende Führungsstange ohne jede Rotation durch den Induktor durchschiebt, da anderenfalls der Magnetfluß nicht mehr ohne weiteres in der gewünschten Weise gesteuert werden bzw. wirken könnte.

Gegebenenfalls könnte die Härtebeeinflussung der Zähne durch besondere gesteuerte Kühlmaßnahmen nach dem induktiven Härtevorgang ebenfalls erreicht werden.

Als Ausgangsmaterial zur Herstellung der erfindungsgemäßen Führungsstange sind verschiedene Materialien möglich. So können z.B. induktiv härtbare Kohlenstoffstähle folgender Zusammensetzung verwendet werden:

| | |
|---|---|
| Kohlenstoff: | 0,5 - 0,6 % |
| Silizium: | 0,15 - 0,35 % |
| Mangan: | 0,4 - 0,7 % |
| Phosphor: | max. 0,025 % |
| Schwefel: | max. 0,035 %. |

Derartige Stähle sind in der DIN 17212 aufgeführt.

Ebenso können hierfür nicht rostende und säurebeständige härtbare martensitische Stähle verwendet werden. Eine mögliche Werkstoffzusammensetzung kann hierfür folgende Legierungsbestandteile aufweisen:

| | |
|---|---|
| Kohlenstoff: | 0,85 - 0,95 % |
| Silizium: | max. 1 % |
| Mangan: | max. 1 % |
| Chrom: | 17 - 19 % |
| Molybdän: | 0,9 - 1,3 % |
| Vanadium: | 0,07 - 0,12 % |
| Phosphor: | max. 0,045 % |
| Schwefel: | max. 0,030 %. |

Ebenso sind Wälzlagerstähle, gegebenenfalls auch rostfreie, für diesen Zweck möglich.

Ein weiterer Vorteil gegenüber bekannten Härteverfahren besteht darin, daß bei der induktiven Härtung die Führungsstange vor dem induktiven Härten einer Vergütebehandlung unterworfen werden kann.

Auf diese Weise läßt sich der Kern- und Übergangsbereich der Führungsstange vergüten, um die Kernfestigkeit zu erhöhen, womit eine sehr hohe Festigkeitsbeanspruchung der Führungsstange möglich wird. Dabei können die Zähne der Verzahnung vor oder auch nach dem Vergütevorgang eingebracht werden, wonach anschließend der induktive Härtevorgang erfolgt. Durch die vorangegangene Vergütung wird der Kernquerschnitt in seiner Streckgrenze und der Festigkeit deutlich erhöht.

Die Anordnung des verzahnten Bereiches der Führungsstange bei einem Einbau in eine Linearführung kann beliebig sein, was einen weiteren Vorteil darstellt. Insbesondere kann damit die Antriebseinrichtung stets optimal an die vorliegenden Verhältnisse angepaßt werden. So kann z.B. die Verzahnung auf der Oberseite, auf der Unterseite und auch im Bedarfsfalle seitlich angeordnet sein. Insbesondere eine Anordnung der Verzahnung auf der Oberseite oder seitlich hat den Vorteil, daß damit die Führungsstange für hohe Belastungen auf der Unterseite abgestützt werden kann.

Nachfolgend ist ein Ausführungsbeispiel der Erfindung anhand der Zeichnung prinzipmäßig beschrieben.

Es zeigt:
- Fig. 1:: eine Linearführung mit einer Führungsstange, teilweise im Schnitt
- Fig. 2:: eine Linearführung mit einer Führungsstange in anderer Ausgestaltung
- Fig. 3:: eine weitere Variante einer Linearführung mit einer Führungsstange
- Fig. 4:: zwei miteinander verbundene Linearführungen mit jeweils zwei Führungsstangen für eine zweiachsige Verschiebung.

In einer einfachen Ausgestaltung weist die Linearführung eine Führungsstange 1 auf, die von einem Führungsschlitten 2 umgeben ist. Im Inneren des Führungsschlittens 2 ist eine Kugelbüchse 3 mit insgesamt vier über den Umfang verteilt angeordneten Kugelumläufen 4 angeordnet. Statt einer Kugelbüchse kann selbstverständlich auch hierfür eine Gleitführung bzw. ein Gleitlager vorgesehen sein. Als Führungsstangen können Voll- oder selbstverständlich auch Hohlwellen verwendet werden, da die Art und Ausgestaltung der Führungsstange grundsätzlich für die Erfindung beliebig ist.

Im unteren Bereich ist die Führungsstange 1 auf ca. einem Fünftel ihres Umfangsbereiches mit einer Querverzahnung 5 versehen. Die Breite und die Höhe der Zähne richtet sich dabei jeweils nach dem Anwendungsfall. Die Größe des Umfangsbereiches, in dem die Verzahnung in die Führungsstange 1 eingebracht ist, ist dabei selbstverständlich auch abhängig von dem Abstand der Kugelumläufe 4, da die Verzahnung sich nur in dem Zwischenraum erstrecken kann.

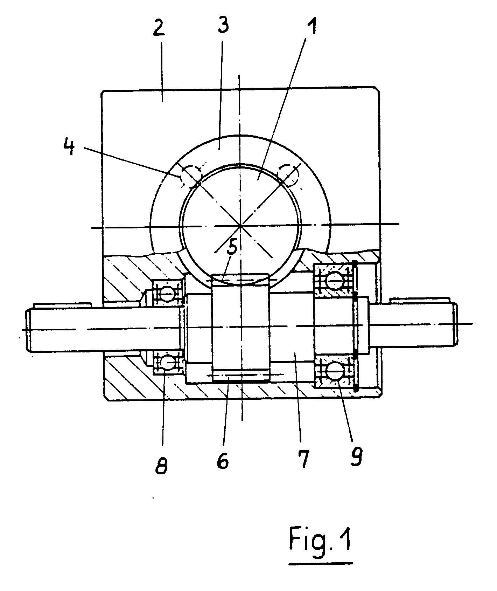

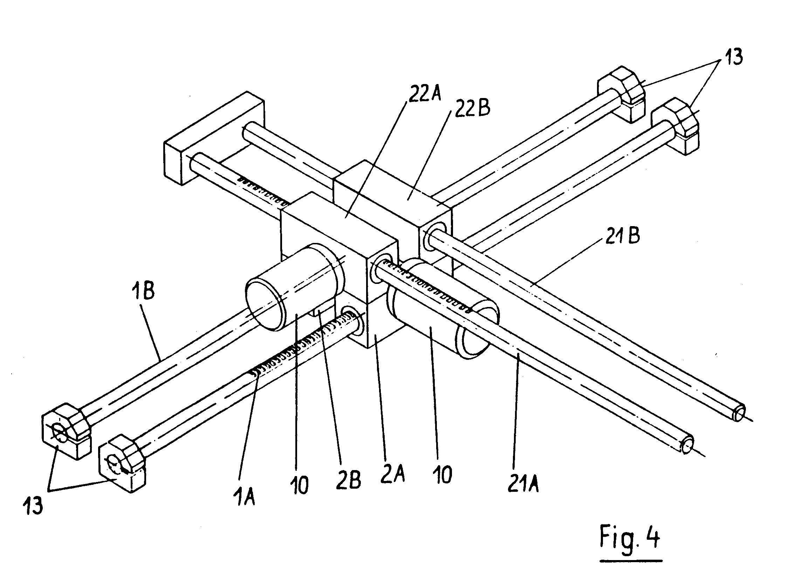

In dem Führungsschlitten 2 ist weiterhin ein Ritzel 6 auf einer Antriebswelle 7 befestigt. Die Antriebswelle 7 ist in Kugellagern 8 und 9 gelagert. Auf einer Seite wird man einen Antriebsmotor 10 (siehe Fig. 4) mit der Antriebswelle 7 verbinden und gleichzeitig an dieser Seite an den Führungsschlitten 2 anflanschen. Die Antriebswelle 7 kann selbstverständlich auch in dem Führungsschlitten 2 enden. Wird sie jedoch wie in dem dargestellten Ausführungsbeispiel der Fig. 1 auf der gegenüberliegenden Seite herausgeführt, kann damit eine Antriebsverbindung zu einer zweiten Führungsstange erreicht werden, womit eine Linearführung mit zwei auf Abstand voneinander angeordneten Führungsstangen 1 erreicht wird.

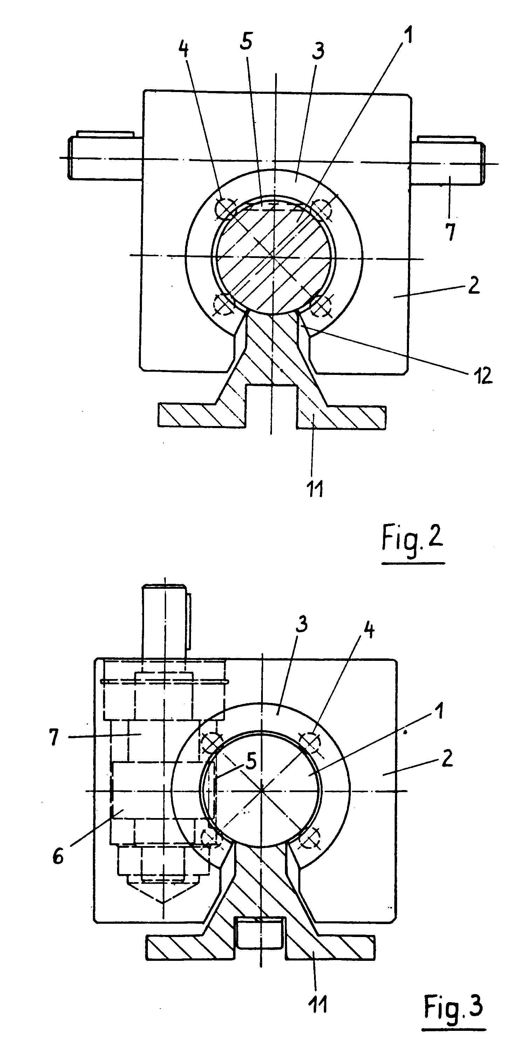

Die Fig. 2 zeigt in Prinzipdarstellung eine ähnliche Linearführung wie in der Fig. 1. Der einzige Unterschied besteht lediglich darin, daß in diesem Ausführungsbeispiel die Verzahnung 5 auf der Oberseite der Führungsstange 1 liegt bzw. die Führungsstange 1 so eingebaut wird, daß die Verzahnung auf der Oberseite liegt. Die Antriebsverbindung kann dabei in gleicher Weise erfolgen wie in der Fig. 1 dargestellt, wobei in diesem Falle lediglich die aus dem Führungsschlitten 2 herausragenden Enden der Antriebswelle 7 dargestellt sind. Wie ersichtlich, liegt der Vorteil dieser Ausgestaltung darin, daß die Führungsstange 1 auf der Unterseite auf einem Lagerbock bzw. einer Lagerschiene 11 aufgelagert und damit unterstützt werden kann. Es ist dabei lediglich erforderlich, in üblicher Weise eine Kugelbüchse 3 vorzusehen, die auf der Unterseite mit einem Schlitz 12 versehen ist.

In der Fig. 3 ist eine dritte Ausführungsform dargestellt, wobei hierbei die Führungsstange 1 so eingebaut ist, daß die Verzahnung 5 seitlich angeordnet ist und mit einer Antriebswelle 7, auf der das Ritzel 6 angeordnet ist, zusammenarbeitet, die eine vertikale Längsachse besitzt. Wie ersichtlich, kann auf diese Weise ebenfalls die Führungsstange auf einer Lagerschiene 11 abgestützt sein.

Der Antriebsmotor 10 für den Antrieb ist in diesem Falle auf der Oberseite des Führungsschlittens 2 angeflanscht.

Mit der mit der Verzahnung 5 versehenen Führungsstange 1 als Kern lassen sich Linearführungen auf beliebige Weise anordnen und insbesondere auch bausteinartig zusammensetzen. Eine derartige Ausgestaltung ist als Beispiel in der Fig. 4 dargestellt.

Wie ersichtlich, arbeiten jeweils zwei Führungsstangen 1A und 1B und 21A und 21B jeweils mit Führungsschlitten 2A und 2B bzw. 22A und 22B zusammen. Wie ersichtlich, ist dabei jeweils die Führungsstange 1A bzw. 21A mit einer Verzahnung 5 versehen, wobei jeweils ein Antriebsmotor 10 für einen Antrieb sorgt. Die beiden Führungsstangen 1B und 21B besitzen keinen gesonderten Antrieb und damit auch keine Verzahnung 5. Selbstverständlich können im Bedarfsfalle jedoch auch diese beiden Führungsstangen jeweils von dem gleichen Antriebsmotor aus angetrieben werden.

Die dargestellte kombinierte Linearführung, die Bewegungen in zwei Achsrichtungen ermöglicht, ist in Lagern 13 gelagert. Wie weiterhin ersichtlich, sind die Führungsschlitten 2A, 2B und 22A und 22B identisch ausgebildet und besitzen auch Verbindungsteile an den gleichen Stellen (nicht dargestellt). Auf diese Weise können die Führungsschlitten beliebig miteinander verbunden werden, wodurch sich eine nahezu beliebige Kombinationsmöglichkeit ergibt. So ist es in diesem Falle auch möglich, zusätzlich zu den beiden auf den unteren Führungsschlitten 2A und 2B befestigten oberen Führungsschienen 22A und 22B noch ein oder zwei Führungsschlitten vorzusehen und auf diese Weise eine Bewegungsmöglichkeit in die dritte Achsrichtung zu schaffen.

Die Führungsstange 1 kann auf folgende Weise hergestellt werden:
In eine noch weiche Führungsstange wird die Querverzahnung 5 z.B. eingeschliffen. Selbstverständlich kann sie gegebenenfalls auch gefräst, gestoßen, gewalzt oder auf beliebige Weise eingebracht werden. Falls erforderlich, kann vorher noch eine Vergütung der Führungsstange in üblicher Weise vorgenommen werden. Hierzu wird diese erhitzt, anschließend abgeschreckt und abschließend wiederum soweit angelassen, bis die gewünschte Vergütung erreicht ist. Dieses Verfahren ist allgemeiner Stand der Technik, weshalb es an dieser Stelle nicht näher erläutert wird.

Der Induktivhärtevorgang erfolgt in einem Rundinduktor, durch den die zu härtende Führungsstange ohne Rotation durchgeschoben wird. Zur Steuerung des Magnetflusses dienen über den Umfang des Rundinduktors angeordnete Blechpakete, die entsprechend so verschoben bzw. so angeordnet werden, daß in Bereichen ohne Verzahnung ein höherer Magnetfluß und damit eine höhere Temperatur entsteht. Der induktive Härtevorgang selbst ist ebenfalls allgemein bekannt, weshalb er hier nicht näher dargelegt wird.

Das induktive Oberflächen-Härten ist ein Verfahren, bei dem in einer nach der Tiefe begrenzten Oberflächenzone des Werkstückes eine höhere Temperatur erzeugt und durch Abschrecken der erhitzten Stellen an diesen eine örtliche Härtung erzielt wird. Es lassen sich dabei abhängig von Frequenz Einhärtetiefen von mehreren Millimetern erzeugen. Eine Induktionsanlage besteht im wesentlichen aus einem Frequenzgenerator und einer Arbeitsvorrichtung. In dem Frequenzgenerator wird die Frequenz des Versorgungsnetzes in einen einphasigen Wechselstrom höherer Frequenz umgewandelt. Die Arbeitsvorrichtung selbst stellt den eigentlichen Induktor dar, der das zu erwärmende Werkstück aufzunehmen und alle erforderlichen Bewegungsabläufe durchzuführen hat. Bei längeren Werkstücken, wie es im vorliegenden Falle mit den Führungsstangen gegeben ist, wird entweder die Führungsstange durch den Induktor durchgeschoben oder der Induktor entlang der Führungsstange geführt. Durch eine gleichmäßige Bewegung des Induktors zum feststehenden Werkstück oder auch umgekehrt gelingt es, fortschreitend eine Glühzone auf der Führungsstange zu erzeugen. Der Wasserstrahl einer mitlaufenden Abschreckbrause vollzieht dann kontinuierlich den Härtevorgang.

Die Einhärtetiefen werden dem jeweiligen Durchmesserbereich angepaßt und berücksichtigen u.a. auch die aufzunehmenden Flächenpressungen, die z.B. von Linearlängskugellagern bei verschiedenen Belastungen auf die Linearführungsstange übertragen bzw. ausgeübt werden.

## Patentansprüche

1. Verfahren zur Herstellung einer gehärteten Führungsstange (1) für eine Linearführung, insbesondere für eine Linearführung mit einem mit Kugelbüchsen (3) versehenen Führungsschlitten (2),
**dadurch gekennzeichnet**, daß
in die Führungsstange (1) über einen Teilumfangsbereich eine Verzahnung (5) eingebracht wird, wonach die Führungsstange (1) mit den Zähnen derart gehärtet wird, daß im Bereich der Verzahnung (5) eine geringere Härte entsteht, als in den übrigen Bereichen der Führungsstange (1).

2. Verfahren nach Anspruch 1,
**dadurch gekennzeichnet**, daß
die Führungsstange (1) nach dem Härten gerichtet und geschliffen wird.

3. Verfahren nach Anspruch 1 oder 2,
**dadurch gekennzeichnet**, daß
die Führungsstange (1) mit einem Rundinduktor induktiv gehärtet wird, wobei der Magnetfluß derart gesteuert wird, daß im Bereich der Verzahnung (5) der Magnetfluß niedriger ist als im übrigen Bereich.

4. Verfahren nach Anspruch 3,
**dadurch gekennzeichnet**, daß
die zu härtende Führungsstange (1) wenigstens annähernd unverdreht durch den Rundinduktor durchgeschoben wird, und daß der Rundinduktor im nicht verzahnten Bereich der Führungsstange mit den Magnetfluß erhöhenden Teilen oder Maßnahmen versehen wird.

5. Verfahren nach Anspruch 4,
**dadurch gekennzeichnet**, daß
als den Magnetfluß erhöhende Teile Blechpakete über einen Teil des Umfanges des Rundinduktors angebracht werden.

6. Verfahren nach einem der Ansprüche 1 - 5,
**dadurch gekennzeichnet**, daß
als Ausgangsmaterial für die Führungsstange (1) induktionshärtbare Stähle mit einem Kohlenstoffgehalt von mehr als 0,4% verwendet werden.

7. Verfahren nach Anspruch 6,
**dadurch gekennzeichnet**, daß
als Ausgangsmaterial für die Führungsstange (1) ein Kohlenstoffstahl mit folgender Zusammensetzung der Nichteisenbestandteile verwendet wird:
| | |
|---|---|
| Kohlenstoff: | 0,5 - 0,6 % |
| Silizium: | 0,15 - 0,35 % |
| Mangan: | 0,4 - 0,7 % |
| Phosphor: | max. 0,025 % |
| Schwefel: | max. 0,035 %. |

8. Verfahren nach einem der Ansprüche 1 - 5,
**dadurch gekennzeichnet**, daß
als Ausgangsmaterial für die Führungsstange (1) nichtrostende, säurebeständige härtbare Stähle verwendet werden.

9. Verfahren nach Anspruch 8,
**dadurch gekennzeichnet**, daß
als Ausgangsmaterial für die Führungsstange (1) als Nichteisenbestandteile folgende Werkstoffzusammensetzung in Gewichtsprozenten verwendet wird:
| | |
|---|---|
| Kohlenstoff: | 0,85 - 0,95 |
| Silizium: | max. 1 |
| Mangan: | max. 1 |
| Chrom: | 17 - 19 |
| Molybdän: | 0,9 - 1,3 |
| Vanadium: | 0,07 - 0,12 |
| Phosphor: | max. 0,045 |
| Schwefel: | max. 0,030. |

10. Verfahren nach einem der Ansprüche 1 - 5,
**dadurch gekennzeichnet**, daß
als Ausgangsmaterial für die Führungsstange (1) Wälzlagerstähle verwendet werden.

11. Verfahren nach einem der Ansprüche 3 - 10,
**dadurch gekennzeichnet**, daß
die Führungsstange (1) vor dem induktiven Härten einer Vergütebehandlung unterworfen wird.

12. Führungsstange (1) nach einem Verfahren gemäß einem der Ansprüche 1 bis 11 für eine Linearführung, insbesondere für eine Linearführung mit einem mit Kugelbüchsen versehenen Führungsschlitten (2), mit einer über einen Teilumfangsbereich der Führungsstange (1) angebrachten Verzahnung (5),
**dadurch gekennzeichnet**, daß
die Führungsstange (1) gehärtet ist und die Verzahnung (5) eine geringere Härte aufweist als der übrige Bereich der Führungsstange (1).

## Claims

1. Production method of a hardened guide shaft (1) for a linear guide, in particular for a linear guide comprising a guide block (2) provided with ball boxes (3), characterised in that toothing (5) is introduced into the guide shaft (1) over a partial circumferential region, after which the guide shaft (1) is hardened together with the toothing in such a manner that a lower hardness is produced in the region of the toothing (5) than in the remaining regions of the guide shaft (1).

2. Method according to claim 1, characterised in that the guide shaft (1) is straightened and ground after hardening.

3. Method according to claim 1 or claim 2, characterised in that the guide shaft (1) is hardened inductively by a circular inductor, the magnetic flux being controlled in such a manner that the magnetic flux is lower in the region of the toothing (5) than in the remaining region.

4. Method according to claim 3, characterised in that the guide shaft (1) to be hardened is pushed at least almost without twisting through the circular inductor, and that the circular inductor is provided in the untoothed region of the guide shaft with components or measures increasing the magnetic flux.

5. Method according to claim 4, characterised in that bundles of laminations are provided over part of the circumference of the circular inductor as components increasing the magnetic flux.

6. Method according to one of claims 1 - 5, characterised in that induction-hardenable steels with a carbon content of more than 0.4 % are used as a starting material for the guide shaft (1).

7. Method according to claim 6, characterised in that a carbon steel with the following composition of the non-iron constituents is used as a starting material for the guide shaft (1):
| | |
|---|---|
| carbon: | 0.5 - 0.6 % |
| silicon: | 0.15 - 0.35 % |
| manganese: | 0.4 - 0.7 % |
| phosphorous: | max. of 0.025 % |
| sulphur: | max. of 0.035 %. |

8. Method according to one of claims 1 - 5, characterised in that stainless acid-resistant hardenable steels are used as a starting material for the guide shaft (1).

9. Method according to claim 8, characterised in that the following material composition of the non-iron constituents in percentages by weight is used as a starting material for the guide shaft (1):
| | |
|---|---|
| carbon: | 0.85 - 0.95 |
| silicon: | max. of 1 |
| manganese: | max. of 1 |
| chromium: | 17 - 19 |
| molybdenum: | 0.9 - 1.3 |
| vanadium: | 0.07 - 0.12 |
| phosphorous: | max. of 0.045 |
| sulphur: | max. of 0.030. |

10. Method according to one of claims 1 - 5, characterised in that anti-friction bearing steels are used as a starting material for the guide shaft (1).

11. Method according to one of claims 3 - 10, characterised in that the guide shaft (1) is subjected to tempering prior to inductive hardening.

12. Guide shaft (1) produced by a process according to one of claims 1 to 11 for a linear guide, in particular for a linear guide comprising a guide block (2) provided with ball boxes, with toothing (5) provided over a partial circumferential region of the guide shaft (1), characterised in that the guide shaft (1) is hardened and the toothing (5) has a lower hardness than the remaining region of the guide shaft (1).

## Revendications

1. Procédé de fabrication d'une barre de guidage trempée (1) pour un guidage linéaire, notamment pour un guidage linéaire comportant un chariot de guidage (2) pourvu de douilles à billes (3), **caractérisé** en ce que l'on ménage une denture (5) dans la barre (1) sur une zone partielle du pourtour de celle-ci après quoi l'on trempe la barre (1) pourvue des dents de manière à produire dans la zone de la denture (5) une dureté moindre que dans les autres zones de la barre (1).

2. Procédé selon la revendication 1, **caractérisé** en ce que l'on dresse et l'on rectifie la barre (1) après la trempe.

3. Procédé selon la revendication 1 ou 2, **caractérisé** en ce que l'on trempe la barre (1) par induction au moyen d'un inducteur annulaire où le flux magnétique est agencé de façon à être plus faible dans la zone de la denture (5) que dans les autres zones.

4. Procédé selon la revendication 3, **caractérisé** en ce que l'on fait passer la barre (1) à tremper au moins approximativement sans rotation à travers l'inducteur annulaire et en ce que l'inducteur annulaire comporte des éléments ou des dispositifs qui augmentent le flux magnétique dans la zone non dentée de la barre.

5. Procédé selon la revendication 4, **caractérisé** en ce que des paquets de tôles sont disposés sur une partie du pourtour de l' inducteur annulaire en guise d'éléments augmentant le flux magnétique.

6. Procédé selon l'une des revendications 1 à 5, **caractérisé** en ce que l'on utilise, comme matériau initial de la barre (1), des aciers à tremper par induction ayant une teneur en carbone supérieure à 0,4%.

7. Procédé selon la revendication 6, **caractérisé** en ce que l'on utilise, comme matériau initial de la barre (1), un acier au carbone ayant les teneurs suivantes en composants non ferreux :
| | |
|---|---|
| carbone | 0,5 - 0,6 % |
| silicium | 0,15 - 0,35 % |
| manganèse | 0,4 - 0,7 % |
| phosphore | max. 0,025 % |
| soufre | max. 0,035 % |

8. Procédé selon l'une des revendications 1 à 5, **caractérisé** en ce que l'on utilise, comme matériau initial de la barre (1), des aciers à tremper inoxydables résistant aux acides.

9. Procédé selon la revendication 8, **caractérisé** en ce que l'on utilise, comme matériau initial de la barre (1), un matériau ayant les teneurs suivantes en composants non ferreux, exprimées en % en poids :
| | |
|---|---|
| carbone | 0,85 - 0,95 |
| silicium | max. 1 |
| manganèse | max. 1 |
| chrome | 17 - 19 |
| molybdène | 0,9 - 1,3 |
| vanadium | 0,07 - 0,12 |
| phosphore | max. 0,045 |
| soufre | max. 0,030. |

10. Procédé selon l'une des revendications 1 à 5, **caractérisé** en ce que l'on utilise comme matériau initial de la barre (1), des aciers à roulements.

11. Procédé selon l'une des revendications 3 à 10, **caractérisé** en ce que l'on soumet la barre (1) à un traitement thermique avant la trempe par induction.

12. Barre de guidage (1) fabriquée par un procédé selon l'une des revendications 1 à 11, pour un guidage linéaire, notamment pour un guidage linéaire comportant un chariot de guidage (2) pourvu de douilles à billes, pourvu de zone partielle du pourtour de la barre, caractérisée en ce que la barre (1) est trempée et la denture (5) présente une dureté moindre que celle du reste de la barre (1).
